# EUROPEAN PATENT APPLICATION

(11) **EP 4 632 736 A1**
(43) Date of publication of application: **15.10.2025**
(21) Application number: 25168058.3
(22) Date of filing: 02.04.2025
(51) Int. Cl.: G10L 21/003, G10L 25/30, G10L 21/013

(54) **MODIFYING AUDIO DATA IN A VIRTUAL MEETING TO INCREASE UNDERSTANDABILITY**

(30) Priority: 11.04.2024 US 202418633092
(71) Applicant: GOOGLE LLC, Mountain View CA 94043 (US)
(72) Inventor: GARCIA, Yadrian Serrano, Mountain View, 94043 (US)
(74) Representative: Derry, Paul Stefan

(57) **Abstract**

A method for modifying audio data in a virtual meeting to increase understandability includes causing a virtual meeting UI to be presented during a virtual meeting between one or more participants. The virtual meeting UI provides first audio data associated with an audio stream produced by a client device of a first participant of the one or more participants. The method includes determining that the first audio data is to be modified during the virtual meeting. The method includes generating, using an AI model and using the audio stream produced by the client device of the first participant as input to the AI model, a modified audio stream to improve understandability of the first audio data by one or more participants. The method includes causing second audio data associated with the modified audio stream to be provided during the virtual meeting in place of the first audio data.

## Description

### TECHNICAL FIELD

Aspects and implementations of the present disclosure relate to virtual meetings and more specifically to modifying audio data in a virtual meeting to increase understandability.

### BACKGROUND

Virtual meetings can take place between one or more participants via a virtual meeting platform. A virtual meeting platform can include tools that allow multiple client devices to be connected over a network and share each other's audio (e.g., voice of a user recorded via a microphone of a client device) and/or video stream (e.g., a video captured by a camera of a client device, or video captured from a screen image of the client device) for efficient communication. To this end, the virtual meeting platform can provide a user interface that includes multiple regions each corresponding to a video stream of a respective participating client device.

### SUMMARY

The below summary is a simplified summary of the disclosure in order to provide a basic understanding of some aspects of the disclosure. This summary is not an extensive overview of the disclosure. It is intended neither to identify key or critical elements of the disclosure, nor delineate any scope of the particular implementations of the disclosure or any scope of the claims. Its sole purpose is to present some concepts of the disclosure in a simplified form as a prelude to the more detailed description that is presented later.

An aspect of the disclosure provides a method for modifying audio data in a virtual meeting to increase understandability. The method may include causing a virtual meeting user interface (UI) to be presented during a virtual meeting between one or more participants. The virtual meeting UI may provide first audio data associated with an audio stream produced by a client device of a first participant of one or more participants. The method may include determining that the first audio data associated with the audio stream produced by the client device of the first participant is to be modified during the virtual meeting. The method may include generating, using an artificial intelligence (AI) model and using the audio stream produced by the client device of the first participant as input to the AI model, a modified audio stream to improve understandability of the first audio data by one or more of the participants of the virtual meeting. The method may include causing second audio data associated with the modified audio stream to be provided during the virtual meeting in place of the first audio data.

Another aspect of the disclosure provides a system for modifying audio data in a virtual meeting to increase understandability. The system may include a memory and a processing device coupled to the memory. The processing device may be configured to perform one or more operations. The operations may include causing a virtual meeting UI to be presented during a virtual meeting between one or more participants. The virtual meeting UI provides first audio data associated with an audio stream produced by a client device of a first participant of the one or more participants. The operations may include determining that the first audio data associated with the audio stream produced by the client of the first participant is to be modified during the virtual meeting. The operations may include generating, using an AI model and using the audio stream produced by the client device of the first participant as input to the AI model, a modified audio stream to improve understandability of the first audio data by one or more of the participants of the virtual meeting. The operations may include causing second audio data associated with the modified audio stream to be provided during the virtual meeting in place of the first audio data.

Another aspect of the disclosure provides another method for modifying audio data in a virtual meeting to increase understandability. The method may include causing a virtual meeting UI to be presented during a virtual meeting between one or more participants. The virtual meeting UI may provide multiple first audio data at multiple time periods during the virtual meeting. Each first audio data of the multiple first audio data may be associated with an audio stream produced by a client device of a respective participant of the one or more participants. The method may include determining that the multiple first audio data are to be modified during the virtual meeting. The method may include generating, using multiple AI models and using the audio streams of the one or more participants as input to the AI models, multiple modified audio streams. Each modified audio stream is associated with a participant of the one or more participants, and the respective modified audio streams improve understandability of the respective first audio data by one or more participants of the virtual meeting. The method may include causing multiple second audio data associated with the multiple modified audio streams to be provided during the virtual meeting in place of the multiple first audio data.

### BRIEF DESCRIPTION OF THE DRAWINGS

Aspects and implementations of the present disclosure will be understood more fully from the detailed description given below and from the accompanying drawings of various aspects and implementations of the disclosure, which, however, should not be taken to limit the disclosure to the specific aspects or implementations, but are for explanation and understanding only.
**FIG. 1** illustrates an example system architecture for modifying audio data in a virtual meeting to increase understandability, in accordance with some implementations of the present disclosure.
**FIG. 2** depicts a flow diagram of a method for modifying audio data in a virtual meeting to increase understandability, in accordance with some implementations of the present disclosure.
**FIG. 3** depicts an example artificial intelligence (AI) subsystem for a virtual meeting platform for modifying audio data in a virtual meeting to increase understandability, in accordance with some implementations of the present disclosure.
**FIG. 4** depicts an example block diagram showing a data flow for modifying audio data in a virtual meeting to increase understandability, in accordance with some implementations of the present disclosure.
**FIG. 5A** depicts an example user interface (UI) for a virtual meeting platform for modifying audio data in a virtual meeting to increase understandability, in accordance with some implementations of the disclosure.
**FIG. 5B** depicts another example UI for a virtual meeting platform for modifying audio data in a virtual meeting to increase understandability, in accordance with some implementations of the disclosure.
**FIG. 6** depicts a flow diagram of a method for modifying audio data in a virtual meeting to increase understandability, in accordance with some implementations of the present disclosure.
**FIG. 7** is a block diagram illustrating an exemplary computer system, in accordance with some implementations of the present disclosure.

### DETAILED DESCRIPTION

Aspects of the present disclosure relate to modifying audio data in a virtual meeting to increase understandability. A virtual meeting platform can enable video and/or audio conferences between one or more participants via respective client devices that are connected over a network and share each other's audio (e.g., voice of a user recorded via a microphone of a client device) and/or video streams (e.g., a video captured by a camera of a client device) during a virtual meeting. In some instances, a virtual meeting platform can enable a significant number of client devices (e.g., up to one hundred or more client devices) to be connected via the virtual meeting.

A participant of a virtual meeting can speak to the other participants of the virtual meeting. In a typical virtual meeting, a first participant produces sound (e.g., by speaking), a microphone of the first participant's client device converts the sound to electrical signals, and hardware and software of the client device generate audio data based on the electrical signals. The client device may then provide the audio data over a data network to a virtual meeting server. The virtual meeting server may then synchronize the audio data with video data from the client device and provide the video and/or audio data to the client devices of other virtual meeting participants so that the other participants can hear the audio data or view the video of the first participant.

One deficiency of conventional virtual meeting platforms is that such platforms do not provide the capability for the first participant to cause the modification of the first participant's audio data in the virtual meeting. This can be detrimental if, for example, the first participant has a speech issue that may make it difficult for the other participants to understand the first participant when speaking, which may make participating in the virtual meeting uncomfortable for the first participant and thereby devalues the quality of the user experience. Another deficiency of conventional virtual meeting platforms is that such platforms do not provide the capability for the first participant to cause the modification of other participants' audio data provided to the first participant. This can be detrimental if, for example, the first participant has a hearing issue that may make it difficult for the first participant to understand the other participants when they speak, which also may make participating in the virtual meeting difficult for the first participant and thereby devalues the quality of the user experience.

Implementations of the present disclosure address the above and other deficiencies by using artificial intelligence (AI) models to modify the audio data of participants of a virtual meeting in order to improve the understandability of the participants during the virtual meeting. For example, it can be determined that the audio data associated with an audio stream produced by a virtual meeting participant's client device is to be modified, and an AI model can be used to generate a modified audio stream to improve the understandability of the audio data by one or more virtual meeting participants. Further, audio data associated with the modified audio stream can be provided during the virtual meeting in place of the original audio data.

Aspects of the present disclosure provide technical advantages over previous solutions. Aspects of the present disclosure can provide additional functionality to a virtual meeting platform by providing tools that use AI models to modify a virtual meeting participant's audio data so that the audio data is better understandable by virtual meeting participants. The functionality provides an improved user experience during virtual meetings by reducing discomfort experienced by virtual meeting participants and increasing the understandability of participants.

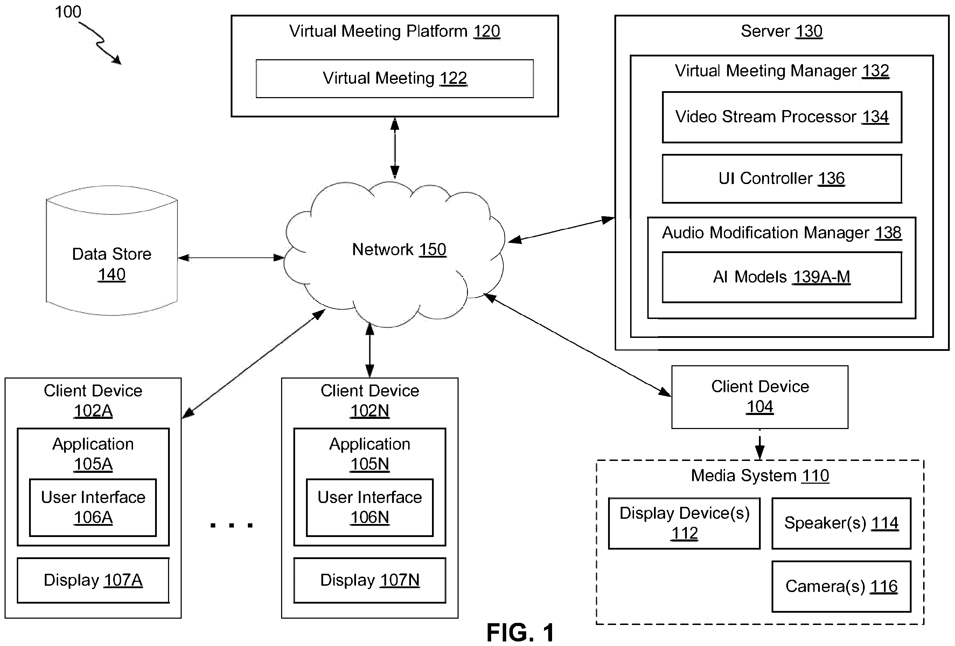

**FIG. 1** illustrates an example system architecture 100 for modifying audio data in a virtual meeting to increase understandability, in accordance with implementations of the present disclosure. System architecture 100 includes one or more client devices 102A-102N or 104, a virtual meeting platform 120, a server 130, and a data store 140, each connected to a network 150.

In some implementations, the virtual meeting platform 120 enables users of one or more of the client devices 102A-102N, 104 to connect with each other in a virtual meeting (e.g., a virtual meeting 122). A virtual meeting 122 refers to a real-time communication session such as a video-based call or video chat, in which participants can connect with multiple additional participants in real-time and be provided with audio and video capabilities. A virtual meeting 122 may include an audio-based call or chat, in which participants connect with multiple additional participants in real-time and are provided with audio capabilities. Real-time communication refers to the ability for users to communicate (e.g., exchange information) instantly without transmission delays and/or with negligible (e.g., milliseconds or microseconds) latency. The virtual meeting platform 120 can allow a user of the virtual meeting platform 120 to join and participate in a virtual meeting 122 with other users of the virtual meeting platform 120 (such users sometimes being referred to, herein, as "virtual meeting participants" or, simply, "participants"). Implementations of the present disclosure can be implemented with any number of participants connecting via the virtual meeting 122 (e.g., up to one hundred or more).

In implementations of the disclosure, a "user" or "participant" can be represented as a single individual. However, other implementations of the disclosure encompass a "user" being an entity controlled by a set of users or an organization and/or an automated source such as a system or a platform. In situations in which the systems discussed here collect personal information about users, or can make use of personal information, the users can be provided with an opportunity to control whether the virtual meeting platform 120 or a virtual meeting manager 132 (discussed below) collects user information (e.g., information about a user's social network, social actions or activities, profession, a user's preferences, or a user's current location), or to control whether or how to obtain content from the virtual meeting platform 120 or the virtual meeting manager 132 that can be more relevant to the user. In addition, certain data can be treated in one or more ways before it is stored or used, so that personally identifiable information is removed. For example, a user's identity can be treated so that no personally identifiable information can be determined for the user, or a user's geographic location can be generalized where location information is obtained (such as to a city, ZIP code, or state level), so that a particular location of a user cannot be determined. Thus, the user can have control over how information is collected about the user and used by the virtual meeting platform 120 or the virtual meeting manager 132.

In some implementations, the server 130 includes a virtual meeting manager 132. The virtual meeting manager 132, in one or more implementations, is configured to manage a virtual meeting 122 between multiple users of the virtual meeting platform 120. The virtual meeting manager 132 can provide the virtual meeting UIs 106A-106N (sometimes referred to as, simply, "the UIs 106A-106N") to each client device 102A-N, 104 to enable users to watch and listen to each other during a virtual meeting 122. The virtual meeting manager 132 can also collect and provide data associated with the virtual meeting 122 to each participant of the virtual meeting 122. In some implementations, the virtual meeting manager 132 provides the UIs 106A-106N for presentation by client applications 105A-N. For example, the respective UIs 106A-106N can be displayed on the display devices 107A-107N by the client applications 105A-N executing on the operating systems of the client devices 102A-102N, 104. In some implementations, the virtual meeting manager 132 determines visual items for presentation in the UIs 106A-106N during a virtual meeting 122. A visual item can refer to a UI element that occupies a particular region in the UI 106A-106N and is dedicated to presenting a video stream from a respective client device. Such a video stream can depict, for example, a user of the respective client device 102A-N, 104 while the user is participating in the virtual meeting 122 (e.g., speaking, presenting, listening to other participants, watching other participants, etc., at particular moments during the virtual meeting 122), a physical conference or meeting room (e.g., with one or more participants present), a document or media content (e.g., video content, one or more images, etc.) being presented during the virtual meeting 122, etc.

In some implementations, the virtual meeting manager 132 includes a video stream processor 134 and a UI controller 136. Each of the video stream processor 134 or the UI controller 136 may include a software application (or a subset thereof) that performs certain virtual meeting functionality for the virtual meeting 122. The video stream processor 134 can be configured to obtain video streams from one or more of the client devices 102A-102N, 104. The video stream processor 134 can be configured to determine visual items for presentation in the UI 106A-106N of such client devices 102A-N, 104 during the virtual meeting 122. Each visual item can correspond to a video stream from a client device (e.g., the video stream pertaining to one or more participants of the virtual meeting 122). In some implementations, the video stream processor 134 obtains audio streams from the client devices 102A-N, 104. The audio streams can be associated with the video streams (e.g., from an audiovisual component of the client devices 102A-102N). The video stream processor 134 can be configured to determine audio data for presentation by the UI 106A-N of the client devices 102A-N, 104 during the virtual meeting 122. Once the video stream processor 134 has determined visual items and/or audio data for presentation in the UI 106A-106N, the video stream processor 134 can notify the UI controller 136 of the determined visual items and/or audio data. The visual items for presentation can be determined based on current speaker, current presenter, order of the participants joining the virtual meeting 122, list of participants (e.g., alphabetical), configuration settings, etc.

In some implementations, the UI controller 136 provides the UI 106A-106N for the virtual meeting 122. The UI 106A-106N can include multiple regions. Each region can display a visual item corresponding to a video stream pertaining to one or more participants of the virtual meeting 122. The UI controller 136 can control which video stream's visual item is to be displayed in a specific region of a virtual meeting UI 106A-106N. The UI controller 136 can generate the UIs 106A-106N for the different client devices 102A-102N, 104 and provide the UIs 106A-106N to the client devices 102A-102N, 104. The UI controller 136 can generate different UIs 106A-106N for different client devices 102A-102N, 104. In some implementations, the UI controller 136 generates partial virtual meeting UIs 106A-106N for the applications 105A-105N, and the applications 105A-105N finalize the UIs 106A-106N for display on the displays 107A-107N.

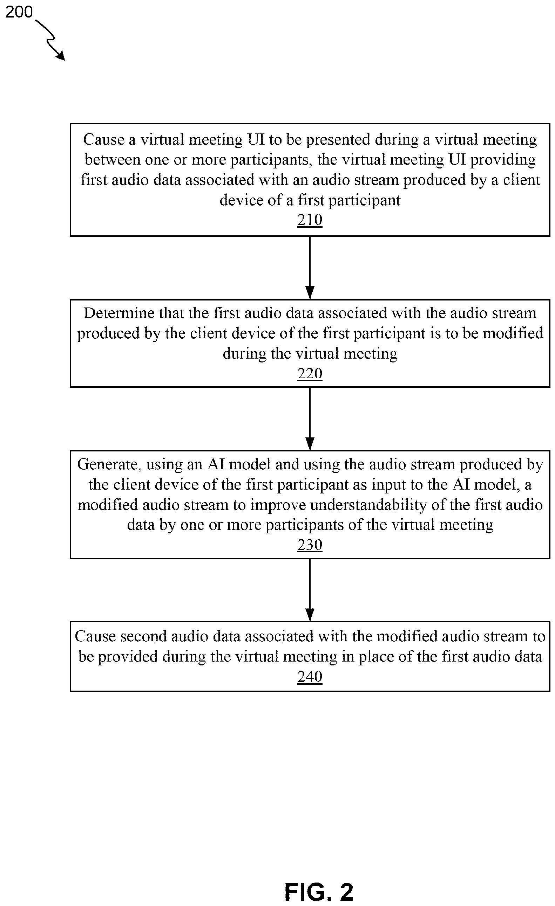

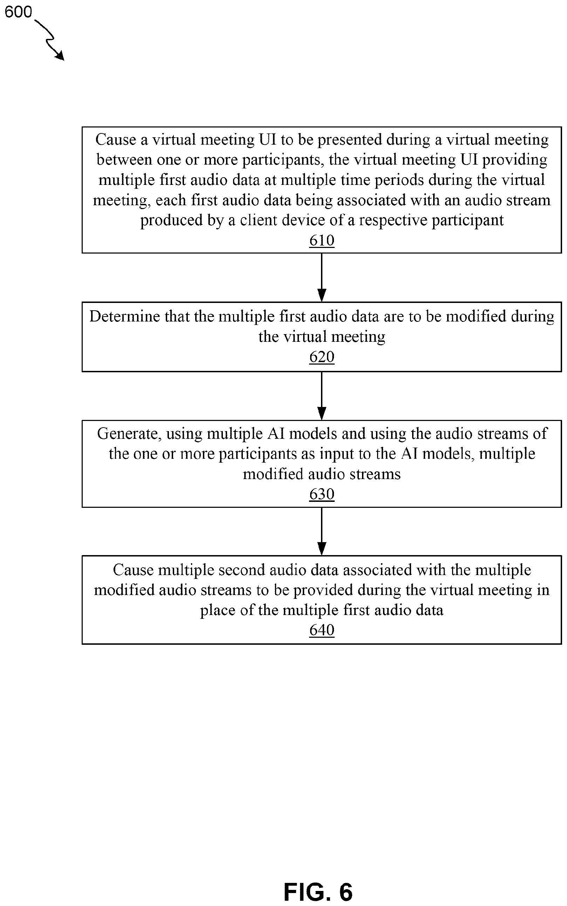

In one or more implementations, the virtual meeting manager 132 includes an audio modification manager 138. The audio modification manager 138 may include a software application (or a subset thereof) that performs certain virtual meeting functionality for a virtual meeting 122. The audio modification manager 138 can be configured to modify, using an AI model, audio data provided by a client device 102A-N, 104 of a virtual meeting participant. The audio modification manager 138 may include one or more AI models 139A-M that the audio modification manager 138 can use to modify a participant's audio data, as discussed further below. Functionality of the audio modification manager 138 is discussed further below in relation to FIGS. 2 and 6.

In some implementations, each of the virtual meeting platform 120 or the server 130 includes one or more computing devices (such as a rackmount server, a router computer, a server computer, a personal computer, a mainframe computer, a laptop computer, a tablet computer, a desktop computer, etc.), data stores (e.g., hard disks, memories, databases), networks, software components, and/or hardware components that can be used to enable a user to connect with other users via a virtual meeting 122. The virtual meeting platform 120 can also include a website (e.g., one or more webpages) or application back-end software that can be used to enable a user to connect with other users by way of the virtual meeting 122.

In some implementations, the one or more client devices 102A-102N each include one or more computing devices such as personal computers (PCs), laptops, mobile phones, smart phones, tablet computers, netbook computers, network-connected televisions, etc. The one or more client devices 102A-102N can referred to as "user devices." Each client device 102A-102N can include an audiovisual component that can generate audio and video data to be streamed to the virtual meeting platform 120. In one or more implementations, the audiovisual component include a device (e.g., a microphone) to capture an audio signal representing speech of a user and generate audio data (e.g., an audio file or audio stream) based on the captured audio signal. The audiovisual component can include another device (e.g., a speaker) to output audio data to a user associated with a particular client device 102A-102N. In some implementations, the audiovisual component includes an image capture device (e.g., a camera) to capture images and generate video data (e.g., a video stream) of the captured data of the captured images.

In some implementations, the system architecture 100 includes a client device 104. The client device 104 can differ from a client device of the one or more client devices 102A-N because the client device 104 can be associated with a physical conference or meeting room. Such client device 104 can include or be coupled to a media system 110 that can include one or more display devices 112, one or more speakers 114 and one or more cameras 116. Display device 112 can be, for example, a smart display or a non-smart display (e.g., a display that is not itself configured to connect to the network 150). Users that are physically present in the room can use the media system 110 rather than their own devices (e.g., one or more of the client devices 102A-102N) to participate in the virtual meeting 122, which can include other remote users. For example, the users in the room that participate in the virtual meeting 122 can control the display device 112 to show a slide presentation or watch slide presentations of other participants. Sound and/or camera control can similarly be performed. Similar to client devices 102A-102N, the one or more client devices 104 can generate audio and video data to be streamed to the virtual meeting platform 120 (e.g., using one or more microphones, speakers 114 and cameras 116).

As described previously, an audiovisual component of each client device 102A-N, 104 can capture images and generate video data (e.g., a video stream) of the captured data of the captured images. In some implementations, the client devices 102A-102N, 104 transmit the generated video stream to virtual meeting manager 132. The audiovisual component of each client device 102A-N, 104 can also capture an audio signal representing speech of a user and generate audio data (e.g., an audio file or audio stream) based on the captured audio signal. In some implementations, the client devices 102A-102N, 104 transmits the generated audio data to the virtual meeting manager 132.

In some implementations, each client device 102A-102N or 104 can include client application 105A-N, which can be a mobile application, a desktop application, a web browser, etc. In some implementations, the client application 105A-N presents, on a display device 107-107N of a client device 102A-102N or a UI (e.g., a UI of the UIs 106A-106N), one or more features of the application 105A-N for users to access the virtual meeting platform 120. For example, a user of client device 102A can join and participate in the virtual meeting 122 via a UI 106A presented on the display device 107A by the application 105A. The user can present a document to participants of the virtual meeting 122 using the UI 106A. Each of the UIs 106A-106N can include multiple regions to present visual items corresponding to video streams of the client devices 102A-102N provided to the server 130 for the virtual meeting 122. In one implementation, the client application 105A-N produce audio data to be played on a sound device of a client device 102A-N, 104 (e.g., the speaker(s) 114).

In one or more implementations, the virtual meeting manager 132 (including the audio modification manager 138) or just the audio modification manager 138 is part of a client device 102A-102N, 104. For example, the application 105A-105N may include the audio modification manager 138 as part of the virtual meeting manager 132 or by itself. In some implementations, in which the application 105A includes the virtual meeting manager 132, the application 105A can modify, using one or more AI models 139A-M, audio data provided by a client device 102A-N, 104 of a virtual meeting participant. In one implementation, the application 105A of the client device 102A obtains audio data from the client device 102A (e.g., from an audio interface device that converts sounds picked up by a microphone of the client device 102A to audio data), inputs the audio data into an AI model 139A-M of the application 105A to generate modified audio data, and provides the modified audio data to other client devices 102B-N, 104. In some implementations, the application 105A provides audio data to the other client devices 102B-N, 104 and can obtain audio data from the other client devices 102B-N, 104. The applications 105A-105N can use their respective AI models 139A-M to generate the modified audio data. Alternatively, when the applications 105A-N include some but not all components of the virtual meeting manager 132, the applications 105A-N can finalize their respective modified audio data, which may have been partially generated by the UI controller 136.

In some implementations, the data store 140 is a persistent storage that is capable of storing data as well as data structures to tag, organize, and index the data. A data item can include audio data and/or video stream data, in accordance with implementations described herein. The data store 140 can be hosted by one or more storage devices, such as main memory, magnetic or optical storage-based disks, tapes, hard drives, flash memory, and so forth. In some implementations, the data store 140 is a network-attached file server, while in other implementations, the data store 140 is another type of persistent storage such as an object-oriented database, a relational database, and so forth, that can be hosted by the virtual meeting platform 120 or one or more different machines (e.g., the server 130) coupled to the virtual meeting platform 120 using the network 150. In some implementations, the data store 140 stores portions of audio and video streams obtained from one or more client devices 102A-102N for the virtual meeting platform 120. Moreover, the data store 140 can store various types of documents, such as a slide presentation, a text document, a spreadsheet, or any suitable electronic document (e.g., an electronic document including text, tables, videos, images, graphs, slides, charts, software programming code, designs, lists, plans, blueprints, maps, etc.). These documents can be shared with users of the client devices 102A-102N and/or concurrently editable by the users.

In some implementations, the network 150 includes a public network (e.g., the Internet), a private network (e.g., a local area network (LAN) or wide area network (WAN)), a wired network (e.g., Ethernet network), a wireless network (e.g., an 802.11 network or a Wi-Fi network), a cellular network (e.g., a Long Term Evolution (LTE) network), routers, hubs, switches, server computers, and/or a combination thereof.

It should be noted that in some other implementations, the functions of the virtual meeting platform 120 or the server 130 are provided by a fewer number of machines. For example, in some implementations, the server 130 is integrated into a single machine, while in other implementations, the server 130 is integrated into multiple machines. In addition, in some implementations, the server 130 is integrated into the virtual meeting platform 120.

In general, one or more functions described in the several implementations as being performed by the virtual meeting platform 120 or server 130 can also be performed by the client devices 102A-N, 104 in other implementations, if appropriate. In addition, in some implementations, the functionality attributed to a particular component is performed by different or multiple components operating together. The virtual meeting platform 120 or the server 130 can also be accessed as a service provided to other systems or devices through appropriate application programming interfaces, and thus is not limited to use in websites.

Although implementations of the disclosure are discussed in terms of the virtual meeting platform 120 and users of the virtual meeting platform 120 participating in a virtual meeting 122, implementations can also be generally applied to any type of telephone call, conference call, or other technological communications methods between users. Implementations of the disclosure are not limited to virtual meeting platforms that provide virtual meeting tools to users.

**FIG. 2** is a flowchart illustrating one implementation of a method 200 for modifying audio data in a virtual meeting 122 to increase understandability, in accordance with some implementations of the present disclosure. A processing device, having one or more central processing units (CPU(s)), one or more graphics processing units (GPU(s)), and/or memory devices communicatively coupled to the one or more CPU(s) and/or GPU(s) can perform the method 200 and/or one or more of the method's 200 individual functions, routines, subroutines, or operations. In certain implementations, a single processing thread performs the method 200. Alternatively, two or more processing threads can perform the method 200, each thread executing one or more individual functions, routines, subroutines, or operations of the method. In an illustrative example, the processing threads implementing the method 200 can be synchronized (e.g., using semaphores, critical sections, and/or other thread synchronization mechanisms). Alternatively, the processing threads implementing the method 200 can be executed asynchronously with respect to each other. Various operations of the method 200 can be performed in a different (e.g., reversed) order compared with the order shown in FIG. 2. Some operations of the method 200 can be performed concurrently with other operations. Some operations can be optional. In some implementations, the virtual meeting manager 132 or the audio modification manager 138 perform one or more of the operations of the method 200.

At block 210, processing logic causes a virtual meeting UI 106A-N to be presented during a virtual meeting 122 between one or more participants. The virtual meeting UI 106AN may provide first audio data associated with an audio stream produced by a client device 102A of a first participant of the one or more participants.

In one implementation, the first audio data includes audio data generated by the client device 102A of the first participant in response to an audio capture device of the client device 102A (e.g., a microphone) capturing sounds in an environment around the client device 102A-N, 104. An audio interface of the client device 102A can convert the captured sounds into the audio data. In some implementations, the client device 102A produces an audio stream, which may include multiple pieces of audio data produced by the client device 102A and ordered in the order the pieces of audio data were generated. In some implementations, the client device 102A provides the audio stream to the virtual meeting manager 132 over the network 150, and the audio stream may include a continuous flow of audio data generated by the client device 102A.

In some implementations, the first audio data includes speech that is spoken by the first participant. For example, the first participant can speak, and a microphone of the first participant's client device 102A can capture the speech. An audio interface of the client device 102A can convert the captured speech into the first audio data. The client device 102A can continuously generate pieces of first audio data as the first participant speaks, and the pieces of first audio data can form part of an audio stream.

It should be noted that while the client device 102A of the first participant is referred to, herein, as the "client device 102A," the client device may include any of the client devices 102A-N, 104.

At block 220, processing logic determines that the first audio data associated with the audio stream produced by the client device 102A of the first participant is to be modified during the virtual meeting 122. In one implementation, determining that the first audio data associated with the audio stream produced by the client device 102A of the first participant is to be modified includes receiving a command from the client device 102A of the first participant. The application 105A executing on the first participant's client device 102A may include, on the UI 106A, a UI element (e.g., a button, a drop-down box, a menu, etc.). In response to the first participant interacting with the UI element, the application 105A can provider a command to the audio modification manager 138 indicating that the audio modification manager 138 is to modify the first audio data from the client device 102A of the first participant. In this manner, the first participant can cause modification of the audio data from the first participant (e.g., because the first participant may have a speech issue and may desire to modify the first participant's audio to increase the understandability of audio data from the first participant).

In some implementations, determining that the first audio data associated with the audio stream produced by the client device 102A of the first participant is to be modified includes receiving a command from a client device 102B of a second participant. The application 105B executing on the second participant's client device 102B may include, on the UI 106B, a UI element, and in response to the second participant interacting with the UI element, the application 105B can provider a command to the audio modification manager 138 indicating that the audio modification manager 138 is to modify the first audio data from the client device 102A of the first participant. In this manner, a participant can cause modification of the audio data from a different participant (e.g., because the second participant may have a hearing issue and may desire to modify the first participant's audio to help the second user understand the audio data from the first participant).

In one implementation, determining that the first audio data associated with the audio stream produced by the client device 102A of the first participant is to be modified includes the audio modification manager 138 obtaining configuration data from the virtual meeting 122. For example, the virtual meeting 122 may include configuration data indicating how the audio modification manager 138 is to modify audio data obtained from or sent to a client device 102A-N, 104 of a participant. The virtual meeting 122 can obtain the configuration data from a client device 102A-N, 104 of a participant of the virtual meeting 122 (e.g., the participant that is leading or hosting the virtual meeting 122). In some implementations, determining that the first audio data associated with the audio stream produced by the client device 102A of the first participant is to be modified includes the audio modification manager 138 obtaining participant configuration data associated with a participant of the virtual meeting 122. The participant configuration data obtained from a client device 102A-N, 104 may include data indicating how the audio modification manager 138 is to modify audio data sent to the client device 102A-N, 104 that provided the participant configuration data. For example, responsive to a participant joining the virtual meeting 122 via a first participant's client device 102A, the application 105A of that client device 102A can provider participant configuration data to the virtual meeting 122, and the audio modification manager 138 can obtain that participant configuration data and modify audio data sent to the client device 102A based on the participant configuration data.

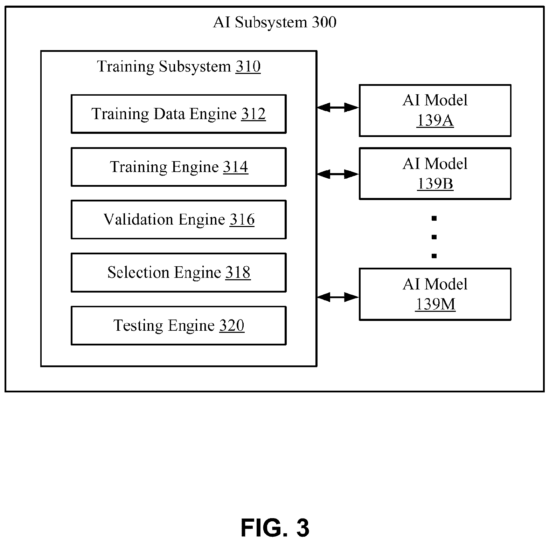

At block 230, processing logic generates, using an AI model and using the audio stream produced by the client device 102A of the first participant as input to the AI model, a modified audio stream to improve understandability of the first audio data. The understandability of the first audio data may include understandability by one or more participants of the one or more participants of the virtual meeting 122. The AI model may include one or more trained AI models 139A-M of the audio modification manager 138. The training of the one or more AI models 139A-M is discussed further below in relation to **FIG. 3****.**

In some implementations, generating the modified audio stream includes using an AI model 139A-M to convert the first audio data associated with the audio stream to second audio data. The first audio data may include the audio data as originally provided by the first participant, and the second audio data may include the same audio data but modified as desired by a participant of the virtual meeting in order to improve understandability of the audio data.

In one implementation, generating the modified audio stream using the AI model 139A-M includes the AI model 139A-M removing a speech issue of the first participant from the audio stream. A speech issue may include speech disrupted by a speech disorder or speech impairment. The speech issue may include verbal apraxia, cluttering (a rapid rate of speech), aphasia, stuttering, a speech sound disorder (e.g., rhotacism, lambdacism, etc.), or the like. In some implementations, generating the modified audio stream using the AI model 139A-M includes changing an accent of the first participant in the audio stream. Changing the accent may include changing the accent from one accent to another. For example, the original audio stream may include speech in a French accent, and the modified audio stream may include the same speech in a United States western New England accent.

In one implementation, generating the modified audio stream using the AI model 139A-M includes the AI model 139A-M increasing a pitch of the audio stream. In one implementation, generating the modified audio stream using the AI model 139A-M includes the AI model 139A-M decreasing a pitch of the audio stream. In some implementations, generating the modified audio stream using the AI model 139A-M includes changing a timbre of the audio stream. For example, the audio stream may include speech in the voice of a man, and the modified audio stream may include the same speech in the voice of a woman. In another example, the audio stream may include speech in the voice of an adult man, and the modified audio may include the same speech in the voice of a child.

In one implementation, generating the modified audio stream using the AI model 139A-M includes the AI model 139A-M removing a nasal characteristic from the speech of the audio stream. For example, a participant may be sick and have nasal congestion, which may cause the participant's speech to sound muffled. The AI model 139A-M can modify the participant's audio stream to remove the muffled sound caused by the nasal congestion, and the modified audio stream may include speech without nasal congestion.

At block 240, processing logic causes second audio data associated with the modified audio stream to be provided during the virtual meeting 122 in place of the first audio data. In one implementation, the video stream processor 134 obtains the modified audio stream from the audio modification manager 138. The video stream processor 134 can determine to which client devices 102A-N, 104 to provide the second audio data associated with the modified audio stream. The UI controller 136 can then provide the second audio data to the determined client devices 102A-N, 104. Where the UI controller 136 provides visual items to the client devices 102A-N, 104, the video stream processor 134, the UI controller 136, or the application 105A-N can synchronize the second audio data with the visual item associated with the first participant.

In one implementation, causing the second audio data associated with the modified audio stream to be provided during the virtual meeting 122 in place of the first audio data includes causing the second audio to be provided to all client devices 102A-N, 104 of the virtual meeting 122. In some implementations, causing the second audio data associated with the modified audio stream to be provided during the virtual meeting 122 in place of the first audio data includes causing, for a subset of the one or more participants of the virtual meeting 122, the second audio data to be provided in place of the first audio data. The subset of the participants may include all of the participants of the virtual meeting 122 except for the first participant (e.g., the participant whose audio data is modified by an AI model 139A-M). This may be because causing the second audio data to be provided in place of the first audio data at the first participant's client device 102A can cause the first participant to hear both the first audio data (e.g., when the first participant speaks) and the second audio data (e.g., via the virtual meeting UI 106A) simultaneously or nearly simultaneously, which can cause confusion or otherwise be unpleasant. In some implementations, the subset of participants includes participants selected by the first participant. For example, when activating an AI model 139AM using a UI element, the UI 106A can prompt the first participant to select which participants of the virtual meeting 122 are to hear the second audio data associated with the modified audio stream of the first participant.

In some implementations, causing, for a subset of the one or more participants of the virtual meeting 122, the second audio data to be provided in place of the first audio data includes causing, for a second participant of the one or more participants, the second audio data to be provided in place of the first audio data. This may be in response to the second participant interacting with a UI element of the application 105B of the client device 102B associated with the second participant. As an example, the second participant may have a hearing issue and may desire to use an AI model 139A-M to increase the understandability of the first participant. The second participant may interact with an audio modification UI element of the application 105B to select (1) the type of AI model 139A-M (e.g., an AI model 139A-M that increases the pitch of the first participant's audio) and (2) the participant(s) to which the AI model 139A-M will be applied. Responsive to receiving indication of the UI element interaction, the audio modification manager 138 can cause the AI model 139A-M to generate the modified audio stream using the audio stream produced by the first participant's client device 120A as input. The audio modification manager 138 can provide the modified audio stream, which may be obtained by the virtual meeting manager 132, and the virtual meeting manager 132 can provide the second audio associated with the modified audio stream 420 to the second participant's client device 120B.

**FIG. 3** illustrates an example AI subsystem 300 for modifying audio data in a virtual meeting to increase understandability, in accordance with implementations of the present disclosure. As illustrated in FIG. 3, the AI subsystem 300 can include a training subsystem 310, which may include a training data engine 312, a training engine 314, a validation engine 316, a selection engine 318, or a testing engine 320. The AI subsystem 300 may include one or more AI models 139A-M.

In one implementation, an AI model 139A-M include one or more of artificial neural networks (ANNs), decision trees, random forests, support vector machines (SVMs), clustering-based models, Bayesian networks, or other types of machine learning models. ANNs generally include a feature representation component with a classifier or regression layers that map features to a target output space. The ANN can include multiple nodes ("neurons") arranged in one or more layers, and a neuron may be connected to one or more neurons via one or more edges ("synapses"). The synapses can perpetuate a signal from one neuron to another, and a weight, bias, or other configuration of a neuron or synapse can adjust a value of the signal. Training the ANN may include adjusting the weights or other features of the ANN based on an output produced by the ANN during training.

An ANN may include, for example, a convolutional neural network (CNN), recurrent neural network (RNN), or a deep neural network. A CNN, a specific type of ANN, hosts multiple layers of convolutional filters. Pooling is performed, and non-linearities may be addressed, at lower layers, on top of which a multi-layer perceptron is commonly appended, mapping top layer features extracted by the convolutional layers to decisions (e.g., classification outputs). A deep network may include an ANN with multiple hidden layers or a shallow network with zero or a few (e.g., 1-2) hidden layers. Deep learning is a class of machine learning algorithms that use a cascade of multiple layers of nonlinear processing units for feature extraction and transformation. Each successive layer uses the output from the previous layer as input. An RNN is a type of ANN that includes a memory to enable the ANN to capture temporal dependencies. An RNN is able to learn input-output mappings that depend on both a current input and past inputs. The RNN will address past and future measurements and make predictions based on this continuous measurement information. One type of RNN that can be used is a long short term memory (LSTM) neural network.

ANNs can learn in a supervised (e.g., classification) or unsupervised (e.g., pattern analysis) manner. Some ANNs (e.g., such as deep neural networks) may include a hierarchy of layers, where the different layers learn different levels of representations that correspond to different levels of abstraction. In deep learning, each level learns to transform its input data into a slightly more abstract and composite representation.

In one implementation, an AI model 139A-M includes a generative AI model. A generative AI model can deviate from a machine learning model based on the generative AI model's ability to generate new, original data, rather than making predictions based on existing data patterns. A generative AI model can include a generative adversarial network (GAN), a variational autoencoder (VAE), a large language model (LLM), or a diffusion model. In some instances, a generative AI model can employ a different approach to training or learning the underlying probability distribution of training data, compared to some machine learning models. For instance, a GAN can include a generator network and a discriminator network. The generator network attempts to produce synthetic data samples that are indistinguishable from real data, while the discriminator network seeks to correctly classify between real and fake samples. Through this iterative adversarial process, the generator network can gradually improve its ability to generate increasingly realistic and diverse data.

Generative AI models also have the ability to capture and learn complex, high-dimensional structures of data. One aim of generative AI models is to model underlying data distribution, allowing them to generate new data points that possess the same characteristics as training data. Some machine learning models (e.g., that are not generative AI models) focus on optimizing specific prediction of tasks.

In some implementations, an AI model 139A-M includes an AI model 139A-M that has been trained on a corpus of data. In some implementations, the AI model 139A-M includes an AI model that is first pre-trained on a corpus of data to create a foundational model, and afterwards fine-tuned on more data pertaining to a particular set of tasks to create a more task-specific, or targeted, model. The foundational model can first be pre-trained using a corpus of data that can include data in the public domain, licensed content, and/or proprietary content. Such a pre-training can be used by the AI model 139A-M to learn broad elements including, image or speech recognition, general sentence structure, common phrases, vocabulary, natural language structure, and other elements. In some implementations, this first, foundational model is trained using self-supervision, or unsupervised training on such datasets.

The second portion of training, including fine-tuning, can be unsupervised, supervised, reinforced, or any other type of training. This second portion of training may include some elements of supervision, including learning techniques incorporating human or machine-generated feedback, undergoing training according to a set of guidelines, or training on a previously labeled set of data, etc. In a non-limiting example associated with reinforcement learning, the outputs of the AI model 139A-M while training can be ranked by a user, according to a variety of factors, including accuracy, helpfulness, veracity, acceptability, or any other metric useful in the fine-tuning portion of training. In this manner, the AI model 139A-M can learn to favor these and any other factors relevant to users when generating a response. Further details regarding training are provided below.

In some implementations, an AI model 139A-M includes one or more pre-trained models, or fine-tuned models. In a non-limiting example, the goal of the "fine-tuning" can be accomplished with a second, or third, or any number of additional models. For example, the outputs of the pre-trained model can be input into a second AI model 139B that has been trained in a similar manner as the "fine-tuned" portion of training above. In such a way, two more AI models 139A-M can accomplish work similar to one model that has been pre-trained, and then fine-tuned.

In one implementation, the training subsystem 310 manages the training and testing of the one or more AI models 139A-M. The training data engine 312 can generate training data (e.g., a set of training inputs and a set of target outputs) to train the one or more AI model 139A-M. In an illustrative example, the training data engine 312 can initialize a training set T to null (e.g., {}). The training data engine 312 can add the training data to the training set T and can determine whether training set T is sufficient for training an AI model 139A-M. The training set T can be sufficient for training the AI model 139A-M if the training set T includes a threshold amount of training data, in some implementations. In response to determining that the training set T is not sufficient for training, the training data engine 312 can identify additional data for use as training data. In response to determining that the training set T is sufficient for training, the training data engine 312 can provide the training set T to the training engine 314.

In one implementation, the training data includes multiple items or pieces of training data. Each item of training data may include sample audio data. Each item of training data may include a ground truth that includes audio data that corresponds to the sample audio data of the same item of training data and improves the understandability of that sample audio data.

In one implementation, the sample audio data includes a word spoken by a person. The spoken word may have been spoken with a speech issue, in an accent, or in some other manner to be modified. The corresponding ground truth may include the same word as the audio sample, but the word may have been spoken without the speech issue, in a different accent, using a voice with a different pitch, using a voice with a different timbre, etc. In some implementations, the sample audio includes a single word, multiple words, an entire sentence, multiple sentences, or other pieces of speech data.

As an example, for a first item of training data, the sample audio data may include an adult woman speaking the phrase "the dog ran home" in a United States southern accent. The corresponding ground truth may include audio data including an adult woman speaking the same phrase in a German accent. In another example, for a second item of training data, the sample audio data may include an adult man speaking the phrase "the dog ran home" with the "r" in "ran" being pronounced as a "w" (rhotacism). The corresponding ground truth may include audio data including an adult man speaking the same phrase with the "r" being pronounced correctly.

In some implementations, the sample audio data and the corresponding ground truth audio data in an item of training data are spoken by the same person. In one implementation, the sample audio data and the corresponding ground truth data are spoken by persons with similar timbre or other vocal qualities. In certain implementations, the sample audio data and the corresponding ground truth data are spoken by different persons. In one or more implementations, different pieces of training data include the same sample audio data but have different ground truth audio data.

In some implementations, an item of training data is labeled with data or may include metadata that indicates the type of audio modification the item of training data includes. For example, the metadata may include data indicating higher pitch, lower pitch, male-to-female, female-to-male, adult-to-child, lambdacism, German accent-to-Spanish accent, etc. The metadata may include data indicating the speaker of the sample audio data or the speaker of the ground truth audio data (e.g., adult female, child male, etc.).

The training engine 314 can train an AI model 139A-M using the training data (e.g., training set T). The AI model 139A-M may refer to the model artifact that is created by the training engine 314 using the training data, where such training data can include training inputs and, in some implementations, corresponding target outputs (e.g., correct answers for respective training inputs). The training engine 314 can input the training data into the AI model 139A-M so that the AI model 139A-M can find patterns in the training data and configure itself based on those patterns.

Where an AI model 139A-M uses supervised learning, the training engine 314 can assist the AI model 139A-M in determining whether the AI model 139A-M maps the training input to the target output (the answer to be predicted). Where the AI model 139A-M uses unsupervised learning, the training engine 314 can input the training data into the AI model 139A-M. The AI model 139A-M can configure itself based on the input training data, but since the training data may not include a target output, the training engine 314 may not assist the AI model 139A-M in determining whether the AI model 139A-M provided a correct output during the training process.

In some implementations, an AI model 139A-M is trained to perform a single type of modification to an audio stream. For example, the AI model 139A can be trained to perform rhotacism correction, the AI model 139B can be trained to perform a German accent-to-Australian accent modification, and the AI model 139C can be trained to perform a higher pitch modification. The training engine 314 can select an item of training data for a certain AI model 139A-M based on metadata associated with that item of training data.

The validation engine 316 may be capable of validating a trained AI model 139AM using a corresponding set of features of a validation set from the training data engine 312. The validation engine 316 can determine an accuracy of one or more of the trained AI models 139A-M based on the corresponding sets of features of the validation set. Where the training data may not include a target output, validating a trained AI model 139A-M may include obtaining an output from the AI model 139A-M and providing the output to another entity for evaluation. The other entity may include another AI model configured to evaluate the output of the AI model 139A-M that is undergoing training. The other entity may include a human. The validation engine 316 can discard a trained AI model 139A-M that has an accuracy that does not meet a threshold accuracy or that otherwise fails evaluation. In some implementations, the selection engine 318 is capable of selecting a trained AI model 139A-M that has an accuracy that meets a threshold accuracy. In some implementations, the selection engine 318 is capable of selecting the trained AI model that has the highest accuracy of multiple trained AI models 139A-M. In some implementations, the selection engine 318 obtains input from another AI model or a human and can select a trained AI model 139A-M based on the input.

The testing engine 320 may be capable of testing a trained AI model 139A-M using a corresponding set of features of a testing set from the training data engine 312. For example, a first trained AI model 139A that was trained using a first set of features of the training set can be tested using the first set of features of the testing set. The testing engine 320 can determine a trained AI model 139A-M that has the highest accuracy or other evaluation of all of the trained AI models 139A-M based on the testing sets.

In some implementations, the AI subsystem 300 and/or the audio modification manager 138 each include a predictive component. The predictive component can be configured to feed data as input to an AI model 139A-M (e.g., training data or an audio stream). The predictive component can be configured to obtain one or more outputs from the one or more AI models 139A-M (e.g. a modified audio stream). The predictive component can also be configured to obtain data selecting which AI model 139A-M to use. The predictive component can input the obtained audio stream into the selected AI model 139A-M, which can generate a modified audio stream. The predictive component can obtain the modified audio stream and provide it to the audio modification manager 138. The audio modification manager 138 can then provide the modified audio stream to one or more client devices 102A-N, 104.

In some implementations, the AI subsystem 300 is part of the server 130, the virtual meeting manager 132, the audio modification manager 138. In other implementations, the AI subsystem 300 is part of some other system or sub-system, or the AI subsystem 300 may be an independent system.

In some implementations, one AI model 139A is a copy of another AI model 139B. An AI model 139A being a copy of another AI model 139B may include the two AI models having the same underlying configuration. For example, where the AI model 139B includes an ANN, the copy AI model 139A may include an ANN with the same neurons, synapses, connectivity, activation functions, thresholds, etc. In one or more implementations, the audio modification manager 138 uses copies of AI models 139A-M in order to use AI models 139AM that apply the same audio effect at the same time.

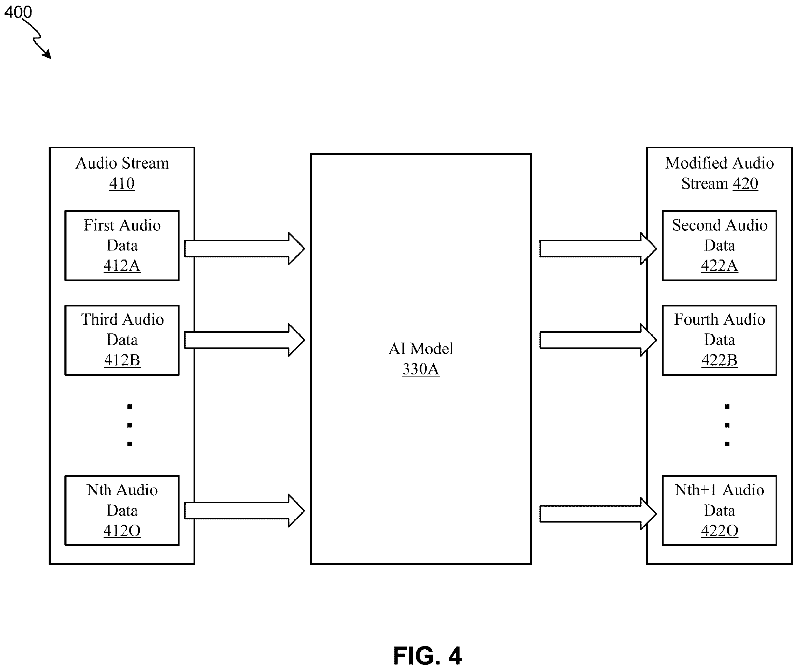

**FIG. 4** depicts an example dataflow 400 for modifying audio data in a virtual meeting to increase understandability, in accordance with some implementations of the disclosure. As can be seen in FIG. 4, the dataflow 400 may include the audio stream 410, the modified audio stream 420, audio data 412A-O and 422A-O, and an AI model 139A. The first, third, . . ., and Nth audio data 412A-O may be associated with the audio stream 410. The second, fourth, ..., and Nth+1 audio data 422A-O may be associated with the modified audio stream 420.

In the example dataflow 400 of **FIG. 4****,** as part of block 230 of the method 200, the AI model 139A can convert audio data 412A-O associated with the audio stream 410 to audio data 422A-O associated with the modified audio stream 420. Converting the audio data 412A-O may include the AI model 139A receiving the first audio data 412A as input, processing the first audio data 412A based on the configuration of the of the AI model 139A (which may have been configured during a training process implemented by the training engine 314, as discussed above), and generating the second audio data 422A as output. Processing the first audio data 412A based on the configuration of the AI model 139A may include increasing the pitch of the first audio data 412A, decreasing the pitch of the first audio data 412A, removing a speech issue from the first audio data 412A, etc., as discussed above. Converting the audio data 412A-O may further include the AI model 139A receiving the third audio data 412B-which is associated with the audio stream 410-as input, processing the third audio data 412B based on the configuration of the AI model 139A, and generating the fourth audio data 422B as output. Converting the audio data 412A-O may further include the AI model 139A continuing to obtain audio data 412C-O associated with the audio stream 410 as input and generating corresponding audio 422C-O associated with the modified audio stream 420.

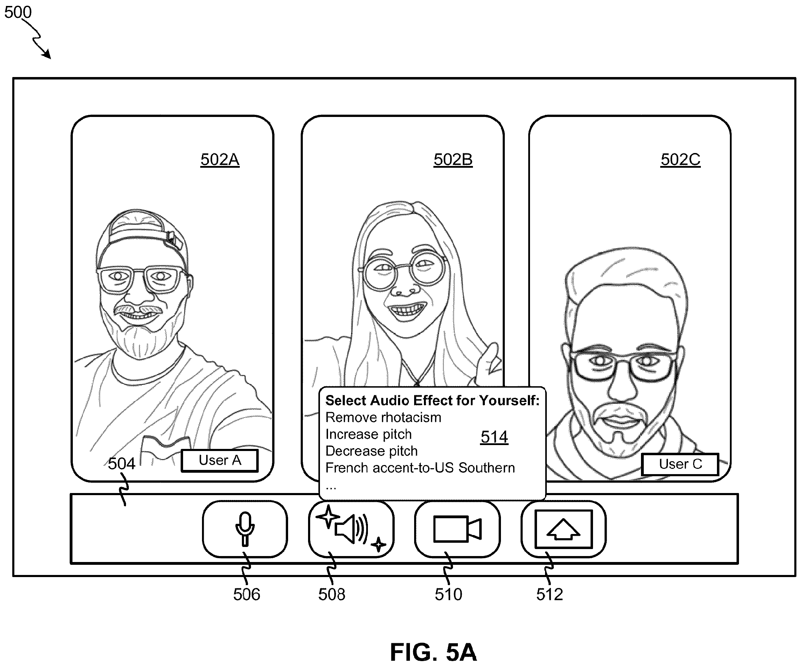

**FIG. 5A** depicts an example UI 500 for modifying audio data 412A-O in a virtual meeting 122 to increase understandability, in accordance with some implementations of the disclosure. The UI 500 can be part of the UI 106A-N of the application 105A-N of FIG. 1.

The UI 500 may include multiple visual items 502A-C, each corresponding to a video stream from a respective client device 102A-N, 104. The UI 500 may include a tool panel 504. The tool panel 504 may include one or more UI elements to select desired audio features, video features, audio modification features, etc. For example, the tool panel 504 may include an audio button 506 that can mute or unmute the participant; an audio modification button 508 that can activate or deactivate audio modification functionality, as described herein; a video button 510 that can cause the video stream to start or stop being broadcast to other participants; or a share button 512 that can allow a participant to share the screen of participant's client device 102A-N, 104.

In one implementation, responsive to the first participant interacting with the audio modification button 508, the UI 500 presents a UI element 514 that allows the first participant to select an audio effect to apply to the audio data 412A-O of the first participant. The UI element 514 may include a menu, a list, or some other UI element that can allow the first participant to select an audio effect to apply to the first participant's audio data 412A-O. Responsive to the first participant selecting an item of the UI element 514, the audio modification manager 138 can use an AI model 139A-M that corresponds to the selected UI element item to modify the audio data 412A-O of the first participant as described herein.

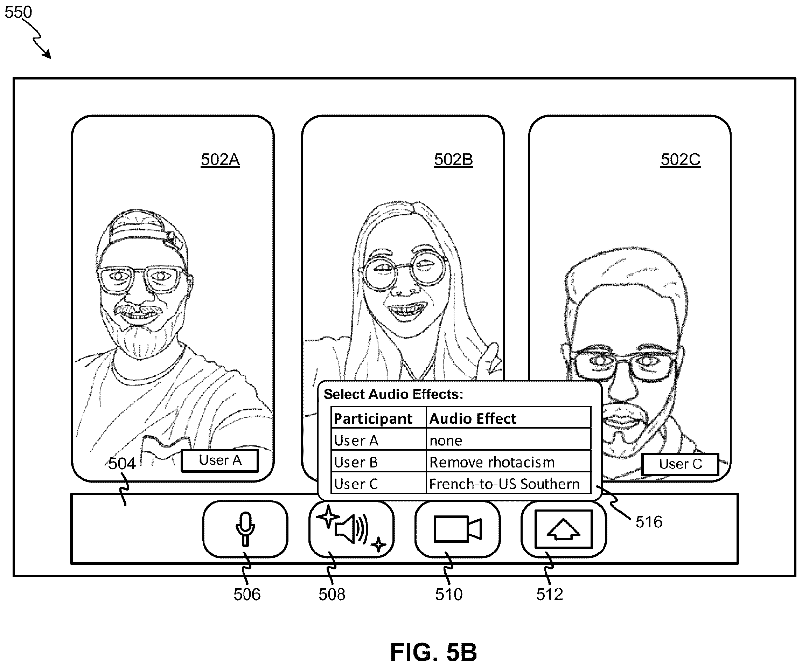

**FIG. 5B** depicts an example UI 550 for modifying audio data 412A-O in a virtual meeting 122 to increase understandability, in accordance with some implementations of the disclosure. The UI 550 may be part of the UI 106A-N of the application 105A-N of FIG. 1. The UI 550 may include components of the UI 500 of FIG. 5A, including the visual items 502A-C, the tool panel 504, and the UI elements 506-512.

In some implementations, responsive to the first participant interacting with the audio modification button 508, the UI 550 presents a UI element 516 that allows the first participant to select one or more audio effects to apply to the audio data 412A-O of a subset of the virtual meeting participants. The UI element 514 may include a menu, a list, or some other UI element that can allow the first participant to select an audio effect to apply to the audio data 412A-O of the subset of respective participants. For example, as seen in FIG. 5B, the UI element 516 can allow the first participant to select a participant and, for the selected participant, an audio effect. The first participant can select different audio effects for different participants. Responsive to the first participant selecting items of the UI element 516, the audio modification manager 138 can use one or more AI models 139A-M that corresponds to the selected items to modify the audio data 412A-O of the subset of participants as described herein.

**FIG. 6** depicts a method 600 for modifying audio data 412 in a virtual meeting 122 to increase understandability, in accordance with some implementations of the disclosure. A processing device, having one or more CPU(s), one or more GPU(s), and/or memory devices communicatively coupled to the one or more CPU(s) and/or GPU(s) can perform the method 600 and/or one or more of the method's 600 individual functions, routines, subroutines, or operations. In certain implementations, a single processing thread performs the method 600. Alternatively, two or more processing threads can perform the method 600, each thread executing one or more individual functions, routines, subroutines, or operations of the method. In an illustrative example, the processing threads implementing the method 600 can be synchronized (e.g., using semaphores, critical sections, and/or other thread synchronization mechanisms). Alternatively, the processing threads implementing the method 600 can be executed asynchronously with respect to each other. Various operations of the method 600 can be performed in a different (e.g., reversed) order compared with the order shown in FIG. 6. Some operations of the method 600 can be performed concurrently with other operations. Some operations can be optional. In some implementations, the virtual meeting manager 132 or the audio modification manager 138 perform one or more of the operations of the method 600.

At block 610, processing logic causes a virtual meeting UI 106A-N to be presented during a virtual meeting 122 between one or more participants. The virtual meeting UI 106AN may provide multiple first audio data 412A at multiple time periods during the virtual meeting 122. Each first audio data 412A of the multiple first audio data 412A may be associated with an audio stream 410 produced by a client device 102A-N, 104 of a respective participant of the one or more participants. In one implementation, each client device 102A-N, 104 produces its own respective audio stream, and each respective audio stream 410 is associated with a respective first audio data 412A. The first audio data 412A of the different audio streams 410, together, can form the multiple first audio data 412A. Block 610 may include similar functionality to the functionality of block 210 of the method 200 FIG. 2.

In some implementations, the virtual meeting UI 106A-N providing multiple first audio data 412A at multiple time periods includes the virtual meeting UI 106A-N providing one piece of first audio data 412A at a first time period and providing another piece of first audio data 412A at a second time period that occurs after the first time period. The different pieces of first audio data 412A may be associated with different audio streams produced by different client devices 102A-B, 104. For example, the virtual meeting UI 106A-N providing one piece of first audio data 412A at a first time period may correspond to a first participant speaking during the first time period, and the virtual meeting UI 106A-N providing another piece of first audio data 412A at a second time period may correspond to a second participant speaking after the first participant speaks.

At block 620, processing logic determines that the multiple first audio data 412A are to be modified during the virtual meeting 122. In one implementation, determining that the multiple first audio data 412A are to be modified includes receiving a command from the client device 102A of a first participant of the one or more participants. In some implementations, determining that the multiple first audio data 412A are to be modified includes receiving multiple commands from multiple client devices 102A-N, 104 of the one or more participants. Block 620 may include similar functionality to the functionality of block 220 of the method 200.

At block 630, processing logic generates, using multiple AI models 139A-M and using the audio streams 410 of the one or more participants as input to the AI models 139A-M, multiple modified audio streams 420. Each modified audio stream 420 may be associated with a participant of the one or more participants. The respective modified audio streams 420 can improve understandability of the respective first audio data 412A by one or more participants of the one or more participants of the virtual meeting 122.

In some implementations, the audio modification manager 138 uses multiple AI models 139A-M during the virtual meeting 122 in order to improve the understandability of the first audio data 412A associated with different audio streams 420 of different participants. For example, a first AI model 139A can use a first participant's audio stream 410 as input to generate a corresponding modified audio stream 420 that removes lambdacism from the first participant's speech, a second AI model 139B can use a second participant's audio stream 410 as input to generate a corresponding modified audio stream 420 that increases the pitch of the second participant's speech, and a third AI model 139C can use the second participant's audio stream 410 as input to generate a corresponding audio stream 420 that removes a nasal characteristic from the second participant's speech. Block 630 may include functionality similar to the functionality of block 230 of the method 200.

At block 640, processing logic causes multiple second audio data 422A associated with the multiple modified audio streams 420 to be provided during the virtual meeting 122 in place of the multiple first audio data 412A. In some implementations, each modified audio stream 420 of the multiple modified audio streams 420 is associated with respective second audio data 422A. The second audio data 422A associated with each modified audio stream 420, together, may form the multiple second audio data 422A. The different second audio data 422 can be provided in place of their respective corresponding first audio data 412A. Block 640 may include functionality similar to the functionality of block 240 of the method 200.

As an example, a virtual meeting 122 may include three participants. The participants may have used their respective UIs 106A-C to configure the audio modification manager 138 such that: (1) the first participant's audio stream is modified using a rhotacism removal AI model 139A, and the first participant's second audio 422A associated with the modified audio stream 420 is provided to the second and third participants' client devices 102B-C; and (2) the second participant's audio stream is modified using a pitch increasing AI model 139B, and the second participant's second audio 422A associated with the modified audio stream 420 is provided to the third participant's client device 102C.

In some implementations, the multiple AI models 139A-M include a first AI model 139A and a second AI model 139B. The first AI model 139A can apply an audio effect to a first audio stream 410 of the audio streams 410, and the second AI model 139B can apply the same audio effect to a second audio stream 410 of the audio streams 410. For example, the audio modification manager 138 can obtain the first and second audio streams 410 from different client devices 102A-N, 104. The first AI model 139A can increase the pitch of audio data 412A-O associated with the first audio stream 410, and the second AI model 139A can increase the pitch of audio data 412A-O associated with the second audio stream 410. The audio modification manager 138 can use AI models 139A-M that apply the same audio effect in order to generate the modified audio streams 420 in parallel, which can assist the audio modification manager 138 in generating the different participant's modified audio streams 420 in real time (or near-real time).

In one implementation, the multiple AI models 139A-M include a first AI model 139A and a second AI model 139B. The first AI model 139A can apply a first audio effect to a first audio stream 410, and the second AI model 139B can apply a second audio effect to a second audio stream 410. The two audio effects may be different. For example, the audio modification manager 138 can obtain the first and second audio streams 410 from different client devices 102A-N, 104. The first AI model 139A can increase the pitch of audio data 412A-O associated with the first audio stream 410, and the second AI model 139A can change an accent in audio data 412A-O associated with the second audio stream 410. The audio modification manager 138 can use AI models 139A-M that apply different audio effect in order to generate the different modified audio streams 420 for different virtual meeting participants.

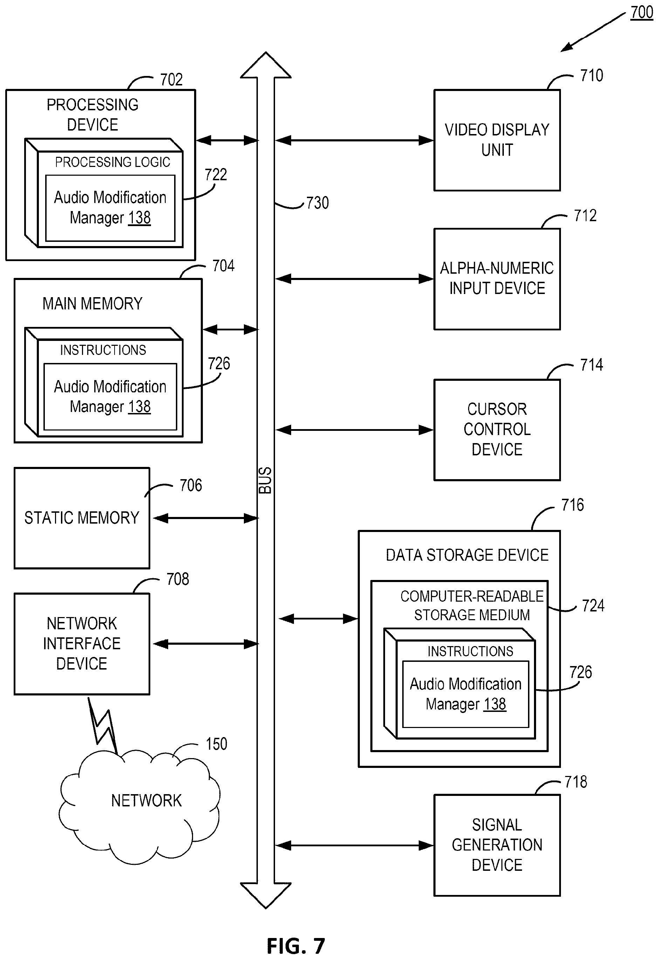

**FIG. 7** is a block diagram illustrating an example computer system 700, in accordance with implementations of the present disclosure. The computer system 700 can include a client device 102A-N, 104, the virtual meeting platform 120, or the server 130 in FIG. 1. The machine can operate in the capacity of a server or an endpoint machine, in an endpoint-server network environment, or as a peer machine in a peer-to-peer (or distributed) network environment. The machine can be a television, a personal computer (PC), a tablet PC, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 700 includes a processing device (processor) 702, a main memory 704 (e.g., read-only memory (ROM), flash memory, dynamic random access memory (DRAM) such as synchronous DRAM (SDRAM), double data rate (DDR SDRAM), or DRAM (RDRAM), etc.), a static memory 706 (e.g., flash memory, static random access memory (SRAM), etc.), and a data storage device 716, which communicate with each other via a bus 730.

The processing device 702 represents one or more general-purpose processing devices such as a microprocessor, central processing unit, or the like. More particularly, the processing device 702 can be a complex instruction set computing (CISC) microprocessor, reduced instruction set computing (RISC) microprocessor, very long instruction word (VLIW) microprocessor, or a processor implementing other instruction sets or processors implementing a combination of instruction sets. The processing device 702 can also be one or more special-purpose processing devices such as an application specific integrated circuit (ASIC), a field programmable gate array (FPGA), a digital signal processor (DSP), network processor, or the like. The processing device 702 is configured to execute the processing logic 722 for performing the operations discussed herein (e.g., the operations of the audio modification manager 138).

The computer system 700 can further include a network interface device 708. The computer system 700 also can include a video display unit 710 (e.g., a liquid crystal display (LCD) or a cathode ray tube (CRT)), an input device 712 (e.g., a keyboard, and alphanumeric keyboard, a motion sensing input device, touch screen), a cursor control device 714 (e.g., a mouse), and a signal generation device 718 (e.g., a speaker).

The data storage device 716 can include a non-transitory machine-readable storage medium 724 (sometimes referred to as a "computer-readable storage medium") on which is stored one or more sets of instructions 726 (e.g., the instructions to carry out one or more operations of the audio modification manager 138) embodying any one or more of the methodologies or functions described herein. The instructions can also reside, completely or at least partially, within the main memory 704 and/or within the processing device 702 during execution thereof by the computer system 700, the main memory 704 and the processing device 702 also constituting machine-readable storage media. The instructions can further be transmitted or obtained over the network 150 via the network interface device 708.

In one implementation, the instructions 726 include instructions for determining visual items for presentation in a user interface of a virtual meeting. While the computer-readable storage medium 724 (machine-readable storage medium) is shown in an exemplary implementation to be a single medium, the terms "computer-readable storage medium" and "machine-readable storage medium" should be taken to include a single medium or multiple media (e.g., a centralized or distributed database, and/or associated caches and servers) that store the one or more sets of instructions. The terms "computer-readable storage medium" and "machine-readable storage medium" shall also be taken to include any medium that is capable of storing, encoding or carrying a set of instructions for execution by the machine and that cause the machine to perform any one or more of the methodologies of the present disclosure. The terms "computer-readable storage medium" and "machine-readable storage medium" shall accordingly be taken to include, but not be limited to, solid-state memories, optical media, and magnetic media.

Reference throughout this specification to "one implementation," or "an implementation," means that a particular feature, structure, or characteristic described in connection with the implementation is included in at least one implementation. Thus, the appearances of the phrase "in one implementation," or "in an implementation," in various places throughout this specification can, but are not necessarily, referring to the same implementation, depending on the circumstances. Furthermore, the particular features, structures, or characteristics can be combined in any suitable manner in one or more implementations.

To the extent that the terms "includes," "including," "has," "contains," variants thereof, and other similar words are used in either the detailed description or the claims, these terms are intended to be inclusive in a manner similar to the term "comprising" as an open transition word without precluding any additional or other elements.

As used in this application, the terms "component," "module," "system," or the like are generally intended to refer to a computer-related entity, either hardware (e.g., a circuit), software, a combination of hardware and software, or an entity related to an operational machine with one or more specific functionalities. For example, a component can be, but is not limited to being, a process running on a processor (e.g., digital signal processor), a processor, an object, an executable, a thread of execution, a program, and/or a computer. By way of illustration, both an application running on a controller and the controller can be a component. One or more components can reside within a process and/or thread of execution and a component can be localized on one computer and/or distributed between two or more computers. Further, a "device" can come in the form of specially designed hardware; generalized hardware made specialized by the execution of software thereon that enables hardware to perform specific functions (e.g., generating interest points and/or descriptors); software on a computer readable medium; or a combination thereof.

The aforementioned systems, circuits, modules, and so on have been described with respect to interact between several components and/or blocks. It can be appreciated that such systems, circuits, components, blocks, and so forth can include those components or specified sub-components, some of the specified components or sub-components, and/or additional components, and according to various permutations and combinations of the foregoing. Sub-components can also be implemented as components communicatively coupled to other components rather than included within parent components (hierarchical). Additionally, it should be noted that one or more components can be combined into a single component providing aggregate functionality or divided into several separate sub-components, and any one or more middle layers, such as a management layer, can be provided to communicatively couple to such sub-components in order to provide integrated functionality. Any components described herein can also interact with one or more other components not specifically described herein but known by those of skill in the art.

Moreover, the words "example" or "exemplary" are used herein to mean serving as an example, instance, or illustration. Any aspect or design described herein as "exemplary" is not necessarily to be construed as preferred or advantageous over other aspects or designs. Rather, use of the words "example" or "exemplary" is intended to present concepts in a concrete fashion. As used in this application, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

Finally, implementations described herein include collection of data describing a user and/or activities of a user. In one implementation, such data is only collected upon the user providing consent to the collection of this data. In some implementations, a user is prompted to explicitly allow data collection. Further, the user can opt-in or opt-out of participating in such data collection activities. In one implementation, the collect data is anonymized prior to performing any analysis to obtain any statistical patterns so that the identity of the user cannot be determined from the collected data.

## Claims

1. A method, comprising:
causing a virtual meeting user interface (UI) to be presented during a virtual meeting between a plurality of participants, the virtual meeting UI providing first audio data associated with an audio stream produced by a client device of a first participant of the plurality of participants;
determining that the first audio data associated with the audio stream produced by the client device of the first participant is to be modified during the virtual meeting;
generating, using an artificial intelligence (AI) model and using the audio stream produced by the client device of the first participant as input to the AI model, a modified audio stream to improve understandability of the first audio data by one or more participants of the plurality of participants; and
causing second audio data associated with the modified audio stream to be provided during the virtual meeting in place of the first audio data.

2. The method of claim 1, wherein the AI model comprises an AI model trained on a plurality of items of training data, wherein each item of training data comprises:
third audio data; and
a ground truth comprising fourth audio data that corresponds to the third audio data and improves the understandability of the third audio data.

3. The method of claim 1 or claim 2, wherein generating the modified audio stream comprises using the AI model to perform at least one of:
remove a speech issue of the first participant from the audio stream; or
change an accent of the first participant in the audio stream.

4. The method of any preceding claim, wherein generating the modified audio stream comprises using the AI model to perform at least one of:
increase a pitch of the audio stream; or
change a timbre of the audio stream.

5. The method of any preceding claim, wherein determining that the first audio data associated with the audio stream produced by the client device of the first participant is to be modified comprises receiving a command from the client device of the first participant.

6. The method of claim 5, wherein the command comprises data indicating an audio effect to be applied by the AI model.

7. The method of any preceding claim, wherein determining that the first audio data associated with the audio stream produced by the client device of the first participant is to be modified comprises receiving a command from a client device of a second participant of the plurality of participants.

8. The method of any preceding claim, wherein causing the second audio data associated with the modified audio stream to be provided during the virtual meeting in place of the first audio data comprises causing, for a subset of the plurality of participants, the second audio data to be provided in place of the first audio data.

9. A method as claimed in claim 1, comprising:
wherein the virtual meeting UI provides a plurality of first audio data at a plurality of time periods during the virtual meeting, wherein each first audio data of the plurality of first audio data is associated with an audio stream produced by a client device of a respective participant of the plurality of participants, the method comprising:
determining that the plurality of first audio data are to be modified during the virtual meeting;
generating, using a plurality of artificial intelligence (AI) models and using the audio streams of the plurality of participants as input to the AI models, a plurality of modified audio streams, wherein
each modified audio stream is associated with a participant of the plurality of participants, and
the respective modified audio streams improve understandability of the respective first audio data by one or more participants of the plurality of participants; and
causing a plurality of second audio data associated with the plurality of modified audio streams to be provided during the virtual meeting in place of the plurality of first audio data.

10. The method of claim 9, wherein:
the plurality of AI models comprises a first AI model and a second AI model;
the first AI model applies an audio effect to a first audio stream of the audio streams; and
the second AI model applies the same audio effect to a second audio stream of the audio streams.

11. The method of claim 9, wherein:
the plurality of AI models comprises a first AI model and a second AI model;
the first AI model applies a first audio effect to a first audio stream of the audio streams; and
the second AI model applies a second audio effect to a second audio stream of the audio streams, wherein the second audio effect is different from the first audio effect.

12. The method of any of claims 9 to 11, wherein determining that the plurality of first audio data is to be modified comprises receiving a command from a client device of a first participant of the plurality of participants.

13. Computer program instructions that, when executed, cause performance of the method of any preceding claim.

14. A system, comprising:
a memory; and
a processing device, coupled to the memory, configured to perform the method of any of claims 1 to 12.
